# DEMANDE DE BREVET EUROPEEN

(11) **EP 2 441 323 A1**
(43) Date de publication de la demande: **18.04.2012**
(21) Numéro de dépôt: 11184704.2
(22) Date de dépôt: 11.10.2011
(51) Int. Cl.: A01G 9/02

(54) **Contenant pour vegetaux**

(30) Priorité: 13.10.2010 FR 1058316
(71) Demandeur: Cochet, M. Patrick, 74150 Massingy (FR)
(72) Inventeur: Cochet, M. Patrick, 74150 Massingy (FR)
(74) Mandataire: Gasquet, Denis

(57) **Abrégé**

Contenant (1) pour végétaux constitué par au moins une paroi laissant passer la lumière (2a, 2b, 2c, 2d, 2f), pour former une enceinte (6) contenant un substrat (3), le dit contenant étant tel qu'au moins une desdites paroi comporte au moins un orifice traversant (8) permettant le passage d'une ou plusieurs plantes (4) caractérisé en ce que lesdites parois sont constitué par au moins une plaque en verre disposée verticalement, réalisant au moins une paroi verticale et en ce que le substrat est de la Sphaigne, favorisant le développement des plantes et végétaux (4)

## Description

La présente invention concerne le domaine de l'hydro culture avec du substrat. Et plus particulièrement un contenant en verre pour la culture des plantes.

La plupart des contenants pour végétaux comportent au moins un fond et une paroi s'étendant vers le haut. Ils sont donc ouverts sur le dessus, ce qui n'autorise qu'une position pour le contenant et la plante. En effet, si l'utilisateur dispose la plante de façon horizontale par rapport au sol, le contenant se vide de sa terre ou de son substrat, l'arrosage devient impossible et la plante ne peut survivre.

Il existe donc divers dispositifs pour réaliser des murs végétaux dans lesquelles la plante pousse horizontalement. Ils consistent en une surface verticale végétalisée, les plantes se développant dans divers substrats de complément. Ces murs ou écrans végétaux se sont imposés ces dernières années pour la réalisation de séparation ou d'habitation. Ces murs permettent de masquer une paroi existante, de remplacer une paroi existante ou de constituer une paroi de séparation. Beaucoup de dispositifs ont été imaginés pour parer aux multiples contraintes qu'impose la culture sur un support verticale, notamment le maintien vertical d'un substrat ou de la terre et l'arrosage des plantes. La plupart des dispositifs existants nécessitent un arrosage quotidien manuel ou automatique et consomment beaucoup d'eau. Beaucoup de dispositifs connus comportent aussi l'inconvénient de ne pas être réellement étanches et des écoulements d'eau non maîtrisés peuvent apparaître et par exemple endommager le sol, les éléments voisins voire même comporter un risque au niveau de la sécurité avec l'électricité. Une autre difficulté réside dans la réalisation de murs modulables et interchangeables et l'intégration d'autres éléments de décoration.

La présente invention se propose de résoudre ces inconvénients dans la réalisation d'un contenant pour végétaux en verre

L'invention concerne un contenant pour végétaux dont la ou les parois est/sont réalisée(s) en matériau laissant passer la lumière. Ce matériau est transparent ou translucide, comme par exemple en verre ou en matière plastique tel qu'en polyéthylène téraphtalate (PET). Le contenant de l'invention comporte l'avantage de réduire significativement la fréquence d'arrosage au minimum, l'évaporation étant réduite. L'étanchéité du contenant de l'invention apporte un confort d'utilisation et une sécurité accrue puisque l'eau ne peut pas endommager les éléments extérieurs qui l'entourent. Le contenant de l'invention comporte aussi l'avantage de pouvoir y introduire des éléments de décoration à l'intérieur du contenant, ces éléments de décoration seront donc visibles. Ajoutons que selon l'invention le contenant contient un substrat tel que de la Sphaigne.

Ainsi, le contenant pour végétaux de l'invention est caractérisé en ce qu'il est constitué par au moins une paroi laissant passer la lumière, pour former une enceinte contenant un substrat, le dit contenant étant tel qu'au moins une desdites paroi comporte au moins un orifice traversant permettant le passage d'une ou plusieurs plantes.

Selon une caractéristique complémentaire, la ou les paroi(s) est ou sont en matériau transparent(s), ou translucide.

Selon d'autres caractéristiques, le matériau est en verre ou en matériau plastique transparent.

Selon l'un des modes de réalisation le contenant pour végétaux est constitué par deux parois réalisées par des plaques, dont au moins l'une comprend l'orifice traversant, tandis que les plaques sont tenues espacées par des entretoises dont l'espace ainsi réalisé est rempli du substrat.

Selon d'autres caractéristiques l'un au moins des montants constituant une structure porteuse est disposé sensiblement verticalement par rapport au sol, tandis que la partie supérieure du contenant comprend une réserve d'eau assurant l'humidification du substrat, et les plaques comportent une pluralité d'orifices traversants pour former un mur végétalisé.

Selon un autre mode de réalisation le contenant pour végétaux est constitué par une enceinte comprenant un substrat ladite enceinte étant formée par un ensemble de parois, qui comprend au moins un orifice traversant pour le passage de la plante et un orifice traversant permettant l'humidification du substrat par trempage.

Ajoutons que le substrat, est de la Sphaigne favorisant le développement des plantes et végétaux.

D'autres caractéristiques et avantages de l'invention se dégageront de la description qui va suivre en regard des dessins annexés qui ne sont donnés qu'à titre d'exemples non limitatifs.
La figure 1 est une vue en perspective du contenant selon un premier mode de réalisation de l'invention
Les figures 2a, 2b, 2c sont des vues illustrant un autre mode de réalisation.

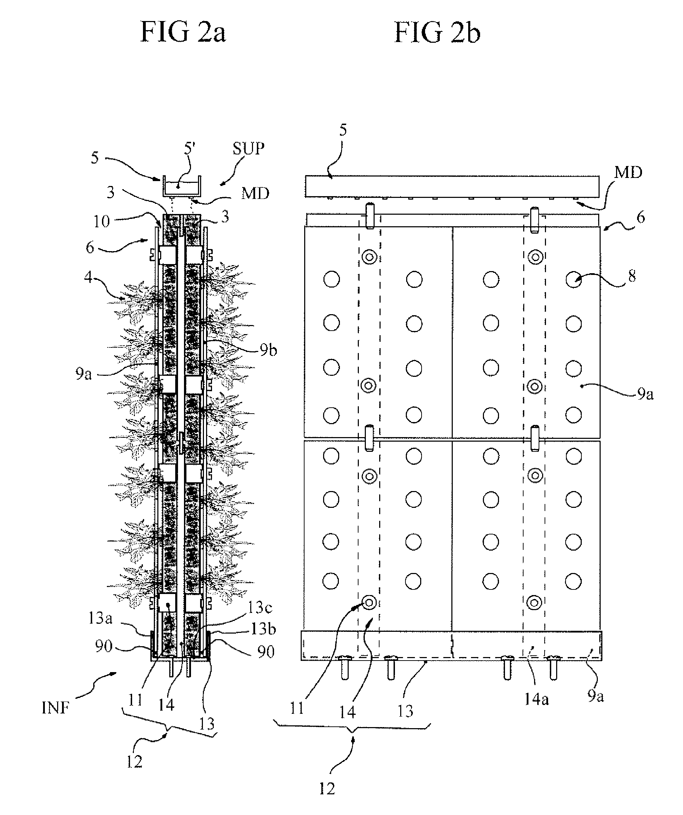

La figure 2a est une vue en coupe.
La figure 2b est une vue en plan.

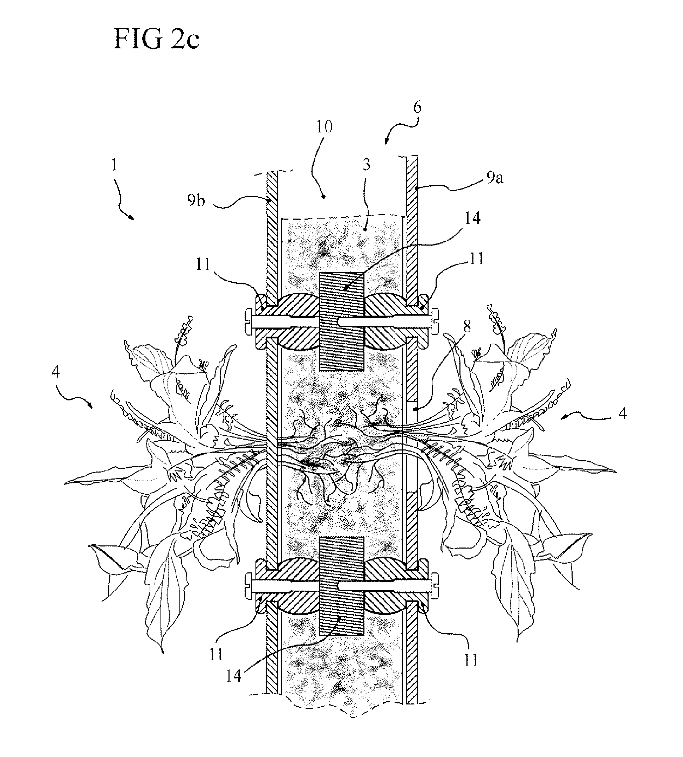

La figure 2c est une vue de détails en en coupe.

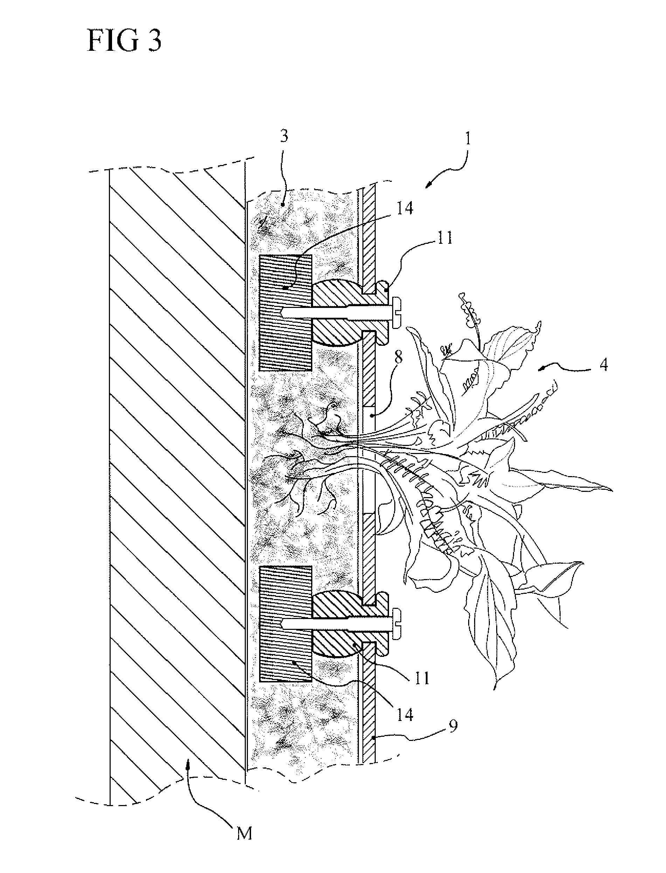

La figure 3 est une vue similaire à la figure 2c, illustrant une variante d'exécution.

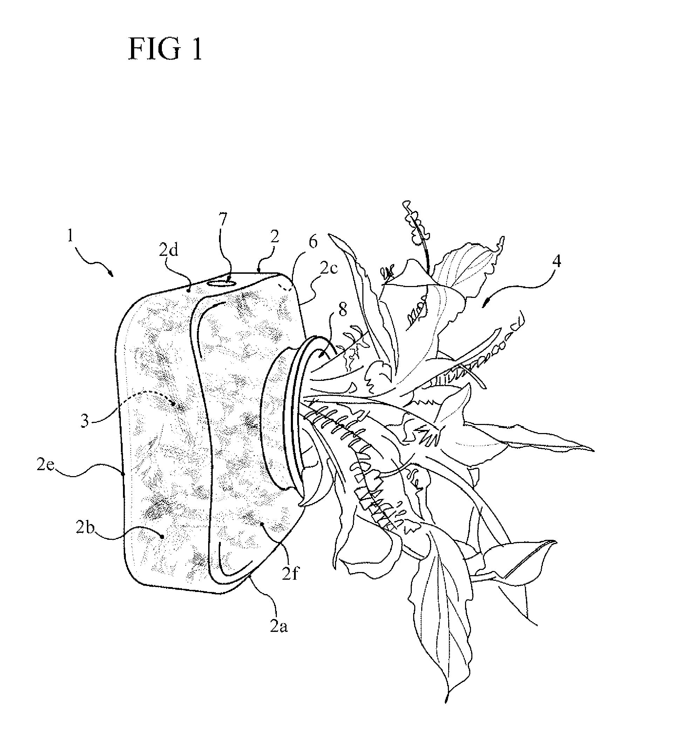

Selon un premier mode de réalisation de l'invention, illustré à la figure 1, le contenant de l'invention (1) est constitué par un ensemble de parois en matériau laissant passer la lumière, c'est-à-dire en matériau transparent ou translucide, tel qu'en verre ou en matériau plastique comme par exemple en polyéthylène téraphtalate (PET), voire en Macrolon ou en Polycarbonate, formant une enceinte (6) à savoir :
- une paroi inférieure (2a) formant le fond du contenant, prolongé vers le haut par
- deux parois latérales (2b, 2c),
- une paroi supérieure (2d),
- une paroi arrière (2e)
- une paroi frontale (2f)

L'enceinte (6) ainsi définie étant destinée à contenir notamment un substrat (3), comme de la Sphaigne par exemple, favorisant le développement des plantes et végétaux (4).

Selon le mode de réalisation représenté à titre d'exemple, le contenant (1) est de forme parallélépipédique.

Bien entendu le contenant (1) peut avoir une autre forme que parallélépipédique sans pour autant sortir du cadre de l'invention, telle qu'ovale, ronde, sphérique ou autre.

Selon le mode de réalisation illustré à la figure 1, l'orifice d'humidification se trouve sur la paroi supérieure (2d), tandis que l'orifice (8) de passage des plantes se situe sur la paroi frontale (2f). Bien entendu il pourrait en être autrement.

On a compris que le contenant (1) de l'invention, permet l'humidification du substrat par trempage de l'enceinte dans de l'eau. Ainsi, et par exemple en plaçant le contenant (1) posé sur sa paroi arrière (2e) dans une cuvette avec de l'eau dont le niveau est suffisant pour que l'eau pénètre par l'orifice (7), il y aura humidification du substrat.

On notera que l'orifice traversant (8) de passage des plantes (4) est plus grand que l'orifice d'humidification (7).

Selon un autre mode de réalisation, tel qu'illustré aux figures 2a, 2b, 2c, constituant un autre mode de réalisation de l'invention, le contenant de l'invention est réalisé par deux plaques (9a, 9b) formant une paroi en matériau laissant passer la lumière, transparent ou translucide tel qu'en verre ou en matériau plastique, comme par exemple en polyéthylène téraphtalate (PET), voire en Macrolon ou Polycarbonate, formant une enceinte (6), maintenues espacées par des entretoises (11). L'espace (10) entre lesdites plaques (9a, 9b) constitue une enceinte (6) et donc un contenant pour un substrat (3).

Selon ce mode de réalisation, lesdites plaques (9a,9b) sont tenues espacées par des entretoises (11) fixées sur une structure (12) et plus particulièrement sur des montants (14) verticaux. Ces entretoises (11) sont avantageusement réalisées dans un matériau souple autorisant la dilatation et la rétractation des plaques transparentes (9a, 9b). Ladite structure est avantageusement réalisée dans un matériau non putrescible et ne craignant pas la rouille, comme par exemple l'aluminium.

La structure de l'invention (12), comporte donc des montants (14) sur lesquelles sont fixées les plaques (9a, 9b) et un socle (13) dans la partie d'extrémité inférieure (14a) des montants. Le socle (13) est constitué par un profil en U formant deux portions de parois latérales (13a, 13b) et une paroi (13c) reliant les parois latérales tandis que les deux portions de parois (13a, 13b) couvrent les parties d'extrémités inférieures (90) des plaques de verre (9a, 9b), fermant ainsi la partie d'extrémité inférieure (INF) du dispositif. Le socle (13) a avantageusement la forme d'un profil en U retenant ainsi le substrat (3) et l'eau (5') contenue dans le substrat (3) entre les plaques, ainsi que les plaques dans leurs extrémités inférieures (90).

Le dispositif de l'invention comporte avantageusement des moyens de retenu latérale (non représenté) du substrat (3) afin que ledit substrat et l'eau ne s'échappent de l'enceinte (6).

Les montants (14) qui composent une partie de la structure (12) sont avantageusement disposés sensiblement verticalement par rapport au sol, mais selon d'autre mode de réalisation, ils sont disposés sensiblement horizontalement par rapport au sol, ou sensiblement inclinés. Les montants (14) ont préférentiellement la forme de poutres parallélépipédiques allongées, sur lesquelles sont fixées les entretoises (11) de l'invention.

Selon le mode préféré de l'invention, les plaques (9a, 9b) et la structure portante (12) sont disposées verticalement, réalisant une paroi verticale. Cette paroi verticale, étant munie d'au moins un orifice traversant de passage de la plante (8) dans laquelle passe la plante (4), et qui constitue un mur végétal.

Les plaques (9a, 9b) de l'invention, sont munies d'un ou plusieurs orifices traversants (8) permettant le passage de la ou des plantes ayant pris racines dans le substrat (3). Lesdits orifices (8) sont, selon le mode préféré de l'invention, de formes circulaires, mais peuvent être de toutes formes sans sortir du champ de l'invention. Donc selon d'autres modes de réalisation, non représentés, les orifices traversant (8) sont des fentes, des motifs, des formes géométriques diverses, permettant de réaliser des parois ou murs végétaux ayant des motifs végétaux personnalisés.

Selon le mode de réalisation illustré aux figures 2a, 2b, 2c, la paroi ou le mur comporte deux faces végétalisées, et les deux parois (9a, 9b) comportent un ensemble d'orifices de passage pour les plantes (4).

Selon la variante illustrée à la figure 3, la structure est fixée contre un mur (M).

Notons que, pour assurer l'humidification, le dispositif comporte une réserve d'eau (5) disposée sur l'extrémité supérieure (SUP) du dispositif. La réserve d'eau (5) est réalisée par un contenant dans lequel l'eau de pluie se rassemble naturellement ou dans lequel l'eau y est introduite par l'utilisateur. A titre d'exemple, ledit contenant est connecté à la gouttière d'écoulement de l'eau de pluie du toit d'un bâtiment. Des moyens de distribution acheminent l'eau (5') contenue dans la réserve (5) vers le substrat (3) afin d'alimenter les plantes en eau.

Selon l'invention, le dispositif ne comporte aucun orifice destiné uniquement à l'apport d'oxygène, ni d'espace interne d'oxygénation, libre, sans sphaigne. La sphaigne, ne pourrissant pas, elle peut être enfermer dans un espace clos et le verre permet la conservation de l'humidité limitant l'évaporation.

Selon une variante de réalisation, le mur comporte quatre parois réalisées en verre comportant sur au moins une de ces parois, des orifices, constituant ainsi, par exemple, une colonne végétale. Selon ce mode de réalisation, les moyens d'espacement sont réalisés par les parois.

## Revendications

1. Contenant (1) pour végétaux constitué par au moins une paroi laissant passer la lumière (2a, 2b, 2c, 2d, 2f, 9a, 9b), pour former une enceinte (6) contenant un substrat (3), le dit contenant étant tel qu'au moins une desdites paroi comporte au moins un orifice traversant (8) permettant le passage d'une ou plusieurs plantes (4) **caractérisé en ce que** lesdites parois sont constitué par au moins une plaque en verre disposée verticalement, réalisant au moins une paroi verticale et **en ce que** le substrat est de la Sphaigne, favorisant le développement des plantes et végétaux (4)

2. Contenant (1) selon la revendication 1, **caractérisé en ce que** la ou les paroi(s) est ou sont en verre transparent(s), ou translucide.

3. Contenant (1) pour végétaux selon l'une quelconque des revendications précédentes, **caractérisé en ce qu'**il est constitué par deux parois réalisées par des plaques (9a, 9b), dont au moins l'une comprend l'orifice traversant (8).

4. Contenant (1) pour végétaux selon l'une quelconque des revendications précédentes, **caractérisé en ce que** les plaques (9a, 9b) sont tenues espacées par des entretoises (11) dont l'espace (10) ainsi réalisé est rempli de la Sphaigne (3).

5. Contenant (1) pour végétaux selon la revendication 4, **caractérisé en ce qu'**au moins une des entretoises (11) est fixée sur au moins un montant (14).

6. Contenant (1) pour végétaux selon l'une des revendications 5 ou 6, **caractérisé en ce que** la ou les entretoises (11) est ou sont réalisée(s) dans des matériaux souples.

7. Contenant (1) pour végétaux selon la revendication 5 et 6, **caractérisé en ce qu'**au moins un des montants (14) constituant une structure porteuse est disposé sensiblement verticalement par rapport au sol, tandis que la partie supérieure du contenant comprend une réserve d'eau (5) assurant l'humidification de la Shaigne (3).

8. Contenant (1) pour végétaux selon l'une quelconque des revendications précédentes, **caractérisé en ce que** les plaques (9a, 9b) comportent une pluralité d'orifices (8) traversant pour former un mur végétalisé.

9. Contenant (1) pour végétaux, selon l'une quelconque des revendications 1 à 3, **caractérisé en ce qu'**il est constitué par une enceinte (6) comprenant de la Sphaigne (3) ladite enceinte étant formée par un ensemble de parois, qui comprend au moins un orifice traversant (8) pour le passage de la plante (4) et un orifice traversant permettant l'humidification du substrat par trempage.

10. Contenant (1) pour végétaux, selon la revendication précédente, **caractérisé en ce qu'**il comprend une paroi inférieure (2a) formant le fond du contenant, prolongé vers le haut par deux parois latérales (2b, 2c), une paroi supérieure (2d), une paroi arrière (2e), et une paroi frontale (2f).
